# EUROPEAN PATENT APPLICATION

(11) **EP 4 202 854 A1**
(43) Date of publication of application: **28.06.2023**
(21) Application number: 22216176.2
(22) Date of filing: 22.12.2022
(51) Int. Cl.: G06V 10/46, G06V 10/75

(54) **METHODS FOR SELECTING KEY-POINTS FOR REAL-TIME TRACKING IN A MOBILE ENVIRONMENT**

(30) Priority: 27.12.2021 KR 20210187936
(71) Applicant: Virnect, Co., Ltd., Seoul 04379 (KR)
(72) Inventor: KIM, Ki Young, 04379 Seoul (KR); KIM, Yeon Jo, 06949 Seoul (KR)
(74) Representative: BCKIP Part mbB

(57) **Abstract**

Provided is a method for selecting key points for real-time tracking in a mobile environment, which is used by a key point application executed by at least one processor of a computing device to select key points for real-time tracking in a mobile environment. The method comprises obtaining a target object image capturing a target object; extracting a plurality of temporary key points from the obtained target object image; determining confirmed key points by filtering the plurality of extracted temporary key points according to a predetermined distribution criterion; setting the confirmed key points as final key points for the target object image; storing target object tracking information including the final key points set for the target object image; and providing the target object tracking information to an application executing a predetermined function through the target object tracking in a mobile environment.

## Description

### CROSS-REFERENCE TO RELATED APPLICATIONS

This Application claims the benefit of Koran Patent Application No. 10-2021-0187936, filed on December 27, 2021 before the Korean Intellectual Property Office.

### BACKGROUND OF THE INVENTION

### Technical Field

The present disclosure relates to a method for selecting key points for real-time tracking in a mobile environment.

### Related Art

Recently, image processing technology that performs information acquisition, identification, and/or tracking using images is used in various fields such as medical services, biometrics, military applications, and/or factory automation; much research is being conducted on the advanced applications of image processing technology.

Image processing technology employs various algorithms depending on the purpose of its use, such as object detection or object tracking algorithm.

Here, the object detection algorithm defines features of an object to identify in advance and extracts the corresponding features within a given image, and the object tracking algorithm expresses an object's movement within the corresponding image in terms of trajectory information, both of which are used in various fields such as surveillance cameras, drone flight stabilization, and Advanced Driver Assistance System (ADAS) for vehicles.

To implement the object detection and tracking algorithms based on a predetermined image sensor using moving images (i.e., consecutive images), conventional methods have used an approach that tracks pixels in the successive images for each image and constructs and classifies three-dimensional points of matched pixels.

Methods of tracking pixels in consecutive images over time include tracking key points through Kanade-Lucas-Tomasi (KLT) tracking algorithm or extracting and matching key points through Scale-Invariant Feature Transform (SIFT) algorithm.

However, conventional methods of the prior art have a problem in that, as a camera moves, the object scale and/or viewpoint within the corresponding image changes or the accuracy and reliability of detecting and/or tracking key points of a target object within the corresponding image degrade due to various types of noise (e.g., blurring or light smearing) caused by the object's motion.

### SUMMARY

An object of the present disclosure is to provide a method for selecting key points for real-time tracking in a mobile environment, which extracts key points of a target object in an image so that the key points are uniformly distributed within the image.

Technical objects to be achieved by the present disclosure and embodiments according to the present disclosure are not limited to the technical objects described above, and other technical objects may also be addressed.

A method for selecting key points for real-time tracking in a mobile environment according to an embodiment of the present disclosure, which is used by a key point application executed by at least one processor of a computing device to select key points for real-time tracking in a mobile environment, comprises obtaining a target object image capturing a target object; extracting a plurality of temporary key points from the obtained target object image; determining confirmed key points by filtering the plurality of extracted temporary key points according to a predetermined distribution criterion; setting the confirmed key points as final key points for the target object image; storing target object tracking information including the final key points set for the target object image; and providing the target object tracking information to an application executing a predetermined function through the target object tracking in a mobile environment.

At this time, the determining confirmed key points by filtering the plurality of extracted temporary key points according to a predetermined distribution criterion includes filtering temporary key points according to a first distribution criterion due to spacings between key points within the target object image and filtering temporary key points according to a second distribution criterion which specifies the maximum number of confirmed key points.

Also, the filtering temporary key points according to a first distribution criterion due to spacings between key points within the target object image includes determining a temporary key point having the highest current feature score among the plurality of temporary key points as a first confirmed key point and filtering temporary key points located within a predetermined distance from the determined first confirmed key point.

Also, the filtering temporary key points according to a first distribution criterion due to spacings between key points within the target object image includes determining a temporary key point having the highest current feature score among the plurality of filtered temporary key points as a second confirmed key point, filtering temporary key points located within a predetermined distance from the second confirmed key point, and determining third to N-th confirmed key points by repeating the determining and filtering confirmed key points.

Also, the filtering temporary key points according to a second distribution criterion which specifies the maximum number of confirmed key points includes determining a plurality of segmentation regions by dividing the target object image into a plurality of regions and filtering the rest of temporary key points within a first segmentation region if the number of confirmed key points included in the first segmentation region among the first to N-th confirmed key points reaches the maximum number of the confirmed key points.

Also, the determining confirmed key points by filtering the plurality of extracted temporary key points according to a predetermined distribution criterion includes terminating the determining the confirmed key points if the number of determined confirmed key points in each of the plurality of segmentation regions reaches the maximum number of the confirmed key points.

Also, the determining confirmed key points by filtering the plurality of extracted temporary key points according to a predetermined distribution criterion includes detecting, among the plurality of segmentation regions, a second segmentation region in which the number of determined confirmed key points is less than the maximum number of the confirmed key points, and all of the extracted temporary key points have been filtered; re-extracting a plurality of temporary key points from the partial-image representing the detected second segmentation region; and determining additional key points by filtering the plurality of re-extracted temporary key points according to the predetermined distribution criterion.

Also, the setting the confirmed key points as final key points for the target object image includes setting final key points for the target object image by including the determined additional key points.

Also, the storing target object tracking information including the final key points set for the target object image includes storing final key points classified for each of the plurality of segmentation regions as the target object tracking information by matching the final key points to each of the segmentation regions.

Also, the providing the target object tracking information to an application executing a predetermined function through the target object tracking in a mobile environment includes providing the target object tracking information so that the application in the mobile environment classifies an image captured when the target object is tracked into a plurality of segmentation regions and performs parallel processing of the plurality of segmentation regions for image tracking through final key points set for each of the plurality of segmentation regions.

Meanwhile, a method for selecting key points for real-time tracking in a mobile environment according to an embodiment of the present disclosure, which is used by a key point application executed by at least one processor of a computing device to select key points for real-time tracking in a mobile environment, comprises obtaining a target object image capturing a target object; dividing the obtained target object image into predetermined regions; extracting a plurality of temporary key points for the target object within the divided target object image; determining confirmed key points for each of the segmentation regions by filtering the plurality of extracted temporary key points according to a predetermined distribution criterion; setting the confirmed key points as final key points for the target object image; storing target object tracking information including the final key points set for the target object image; and providing the target object tracking information to an application executing a predetermined function through the target object tracking in a mobile environment.

A method for selecting key points for real-time tracking in a mobile environment according to an embodiment of the present disclosure extracts key points of a target object in an image so that the extracted key points are uniformly distributed within the image, thereby providing robust key points preventing the performance of detecting and/or tracking the object from being degraded regardless of the scale change and/or viewpoint change for the target object within the image or occurrence of various types of noise (e.g., blurring or light smearing).

Also, a method for selecting key points for real-time tracking in a mobile environment according to an embodiment of the present disclosure enables the implementation of various application services based on the robust key points (e.g., an object detection and/or tracking service, an augmented reality service, a self-driving service, a SLAM service, and/or a robot control service), thereby realizing various application services using more accurate and reliable key point data and, at the same time, improving the performance and quality of the services.

Also, a method for selecting key points for real-time tracking in a mobile environment according to an embodiment of the present disclosure divides an image into predetermined regions, provides key points of the target object in the respective segmentation regions, and thus enables parallel processing based on the key points in the respective segmentation regions when object detection and/or tracking process is performed using the provided key points, thereby improving the data processing speed.

The technical effects of the present disclosure are not limited to the technical effects described above, and other technical effects not mentioned herein may be understood clearly from the description below.

### BRIEF DESCRIPTION OF THE DRAWINGS

FIG. 1 illustrates an internal block diagram of a computing device according to an embodiment of the present disclosure.
FIG. 2 is a flow diagram illustrating a method for selecting key points for real-time tracking in a mobile environment according to an embodiment of the present disclosure.
FIG. 3 illustrates a method for extracting temporary key points within a target object image according to an embodiment of the present disclosure.
FIG. 4 illustrates a method for filtering temporary key points based on a predetermined distance and determining confirmed key points according to an embodiment of the present disclosure.
FIG. 5 illustrates a method for filtering temporary key points based on predetermined image segmentation regions and determining confirmed key points according to an embodiment of the present disclosure.
FIG. 6 illustrates a method for setting additional key points according to an embodiment of the present disclosure.
FIG. 7 is a flow diagram illustrating a method for selecting key points for real-time tracking in a mobile environment according to another embodiment of the present disclosure.
FIG. 8 illustrates a method for extracting temporary key points within a target object image according to another embodiment of the present disclosure.

### DESCRIPTION OF EXEMPLARY EMBODIMENTS

Since the present disclosure may be modified in various ways and may provide various embodiments, specific embodiments will be depicted in the appended drawings and described in detail with reference to the drawings. The effects and characteristics of the present disclosure and a method for achieving them will be clearly understood by referring to the embodiments described later in detail together with the appended drawings. However, it should be noted that the present disclosure is not limited to the embodiment disclosed below but may be implemented in various forms. In the following embodiments, the terms such as first and second are introduced to distinguish one element from the others, and thus the technical scope of the present disclosure should not be limited by those terms. Also, a singular expression should be understood to indicate a plural expression unless otherwise explicitly stated. The term "include" or "have" is used to indicate existence of an embodied feature or constituting element in the present disclosure; and should not be understood to preclude the possibility of adding one or more other features or constituting elements. Also, constituting elements in the figure may be exaggerated or shrunk for the convenience of descriptions. For example, since the size and thickness of each element in the figure has been arbitrarily modified for the convenience of descriptions, it should be noted that the present disclosure is not necessarily limited to what has been shown in the figure.

In what follows, embodiments of the present disclosure will be described in detail with reference to appended drawings. Throughout the specification, the same or corresponding constituting element is assigned the same reference number, and repeated descriptions thereof will be omitted.

### - Computing Device 100

A computing device 100 according to an embodiment of the present disclosure may be a predetermined computing device installed with a **key point application** providing a key point selection service that extracts key points located uniformly within an image.

Specifically, from a hardware point of view, the computing device 100 may include a desktop-type computing device 100 and/or a mobile-type computing device 100 installed with a key point application.

Here, the desktop-type computing device 100 may include a fixed-type desktop PC, a laptop computer, and a personal computer such as an ultrabook in which a program for executing a key point selection service based on wired/wireless communication is installed.

Also, the mobile-type computing device 100 may be a smartphone or a mobile device such as a tablet PC installed with a key point application.

For example, the mobile-type computing device 100 may include a smartphone, a mobile phone, a digital broadcasting terminal, a personal digital assistant (PDA), a portable multimedia player (PMP), and a tablet PC.

Also, depending on embodiments, the computing device 100 may further include a predetermined server computing device that provides a key point selection environment.

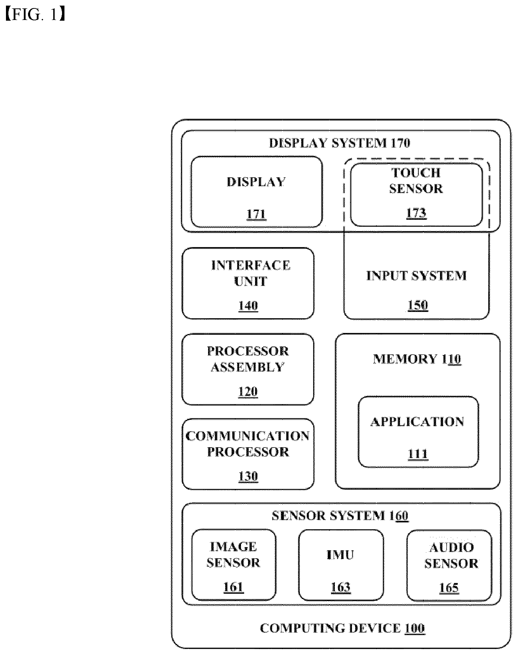

FIG. 1 illustrates an internal block diagram of a computing device according to an embodiment of the present disclosure.

Meanwhile, referring to FIG. 1, from a functional point of view, the computing device 100 may include a memory 110, a processor assembly 120, a communication processor 130, an interface unit 140, an input system 150, a sensor system 160, and a display system 170. The constituting elements may be configured to be included in the housing of the computing device 100.

Specifically, the memory 110 may store the key point application 111, and the key point application 111 may store one or more of various applications, data, and commands for providing a key point selection service environment.

In other words, the memory 110 may store commands and data for creating a key point selection service environment.

Also, the **memory 110** may include a program area and a data area.

Here, the program area according to the embodiment may be linked between an operating system (OS) for booting the computing device 100 and functional elements, and the data area may store data generated according to the use of the computing device 100.

Also, the memory 110 may include at least one or more non-transitory computer-readable storage media and transitory computer-readable storage media.

For example, the memory 110 may be one of various storage devices, such as a ROM, an EPROM, a flash drive, and a hard drive; and may include a web storage performing a storage function of the memory 110 on the Internet.

The **processor assembly 120** may include at least one or more processors capable of executing instructions of a key point application 111 stored in the memory 110 to perform various tasks for creating a key point selection service environment.

In the embodiment, the processor assembly 120 may control the overall operation of the constituting elements through the key point application 111 of the memory 110 to provide a key point selection service.

The processor assembly 120 may be a system-on-a-chip (SOC) suitable for the computing device 100, including a central processing unit (CPU) and/or a graphics processing unit (GPU), execute the operating system (OS) and/or an application program stored in the memory 110, and control the individual constituting elements installed in the computing device 100.

Also, the processor assembly 120 may communicate with each constituting element internally through a system bus and may include one or more predetermined bus structures including a local bus.

Also, the processor assembly 120 may be implemented by using at least one of application-specific integrated circuits (ASICs), digital signal processors (DSPs), digital signal processing devices (DSPDs), programmable logic devices (PLDs), field programmable gate arrays (FPGAs), controllers, micro-controllers, microprocessors, and electric units for performing other functions.

The **communication processor 130** may include one or more devices for communicating with an external device. The communication processor 130 may communicate through a wireless network with the external device.

Specifically, the communication processor 130 may communicate with the computing device 100 that stores a content source for implementing a key point selection service environment and communicate with various user input components, such as a controller that receives a user input.

In an embodiment, the communication processor 130 may transmit and receive various data related to the key point selection service to and from another computing device 100 and/or an external server.

The communication processor 130 may transmit and receive data wirelessly to and from at least one of a base station, an external computing device 100, and an arbitrary server on a mobile communication network built through a communication device capable of performing technology standards or communication methods (e.g., Long Term Evolution (LTE), Long Term Evolution-Advanced (LTE-A), 5G New Radio (NR), and WIFI); or short-range communication methods.

The **sensor system 160** may include various sensors such as an image sensor 161, a position sensor (IMU) 163, an audio sensor 165, a distance sensor, a proximity sensor, and a contact sensor.

Here, the image sensor 161 may capture an image and/or a video of the surrounding physical space of the computing device 100.

In the embodiment, the image sensor 161 may acquire an image related to a key point selection service (e.g., a target object image).

Also, the image sensor 161 is disposed on the front or/and rear surface of the computing device 100 to obtain an image by photographing a scene in the disposed direction, and a camera disposed toward the outside of the computing device 100 may photograph the physical space.

The image sensor 161 may include an image sensor device and an image processing module. Specifically, the image sensor 161 may process a still image or a moving image obtained by the image sensor device (e.g., CMOS or CCD).

Also, the image sensor 161 may extract necessary information by processing a still image or a moving image obtained through the image sensor device using the image processing module and send the extracted information to the processor.

The image sensor 161 may be a camera assembly including at least one or more cameras. The camera assembly may include a general camera that captures an image in the visible light band and may further include a special camera such as an infrared camera and a stereo camera.

Also, depending on embodiments, the image sensor 161 may operate by being included in the computing device 100 or may operate in conjunction with the communication processor 130 and/or the interface unit 140 by being included in an external device (e.g., an external server).

The **position sensor (IMU) 163** may detect at least one or more of the motion and acceleration of the computing device 100. For example, the position sensor (IMU) 163 may be composed of various position sensors such as an accelerometer, a gyroscope, and a magnetometer.

Also, the position sensor (IMU) 163 may recognize spatial information on the surrounding physical space of the computing device 100 in conjunction with a position communication processor 130 such as the GPS.

The **audio sensor 165** may recognize a sound around the computing device 100.

Specifically, the audio sensor 165 may include a microphone capable of detecting a voice input of a user located in the vicinity of the computing device 100.

In the embodiment, the audio sensor 165 may sense and obtain voice data required for a key point selection service.

The **interface unit 140** may connect the computing device 100 communicatively with one or more other devices.

Specifically, the interface unit 140 may include a wired and/or wireless communication device compatible with one or more different communication protocols.

Through the interface unit 140, the computing device 100 may be connected to various input/output devices.

For example, the interface unit 140 may be connected to an audio output device such as a headset port or a speaker to output audio.

For example, although the description assumes that the audio output device is connected through the interface unit 140, an embodiment in which the audio output device is installed inside the computing device 100 is also possible.

Also, for example, the interface unit 140 may be connected to an input device such as a keyboard and/or a mouse to obtain user input.

Although the description assumes that the keyboard and/or the mouse is connected through the interface unit 140, an embodiment in which the keyboard and/or the mouse is installed inside the computing device 100 is also possible.

The interface unit 140 may be implemented by using at least one of a wired/wireless headset port, an external charging port, a wired/wireless data port, a memory card port, a port connecting to a device equipped with an identification module, an audio Input/Output (I/O) port, a video Input/Output (I/O) port, an earphone port, a power amplifier, an RF circuit, a transceiver, and other communication circuits.

The **input system 150** may detect a user's input (e.g., a gesture, a voice command, actuation of a button, or other types of inputs) related to the key point selection service.

Specifically, the input system 150 may include a predetermined button, a touch sensor, and/or an image sensor 161 for receiving user's motion input.

Also, the input system 150 may be connected to an external controller through the interface unit 140 to receive a user's input.

The **display system 170** may output various pieces of information related to the key point selection service as a graphic image.

In an embodiment, the display system 170 may display a target object image, temporary key points, confirmed key points, additional key points, final key points, and/or various user interfaces.

The display system 170 may be implemented using at least one of a liquid crystal display (LCD), a thin film transistor-liquid crystal display (TFT LCD), an organic light-emitting diode (OLED), a flexible display, a three-dimensional (3D) display, and an electronic ink (e-ink) display.

Here, the constituting elements may be disposed in the housing of the computing device 100, and the user interface may include a touch sensor 173 on a display 171 configured to receive a user's touch input.

Specifically, the **display system 170** may include a display 171 that outputs an image and a touch sensor 173 that detects a user's touch input.

For example, the display 171 may be implemented as a touch screen by forming a layer structure with the touch sensor 173 or by being formed integrally with the touch sensor 173.

The touch screen may function as a user input unit that provides an input interface between the computing device 100 and the user and may provide an output interface between the computing device 100 and the user.

### - Method for selecting key points for real-time tracking in a mobile environment

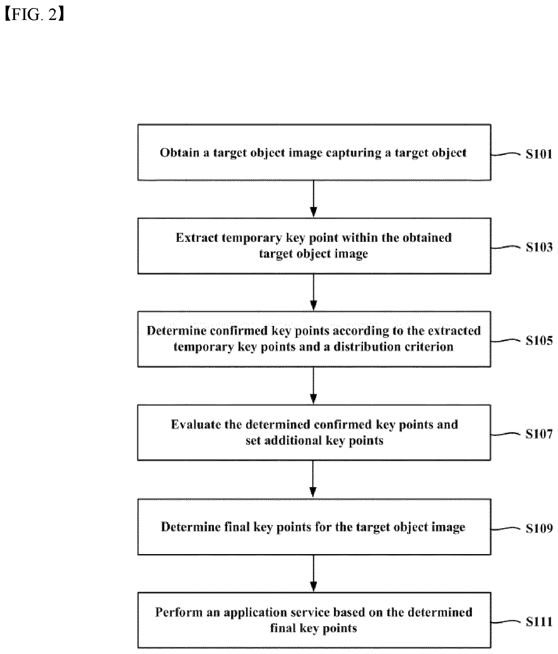

In what follows, a method for selecting key points for real-time tracking in a mobile environment by a key point application 111 executed by at least one or more processors of a computing device 100 according to an embodiment of the present disclosure will be described in detail with reference to FIGS. 2 to 6.

According to an embodiment of the present disclosure, at least one or more processors of the computing device 100 may execute at least one or more key point applications 111 stored in at least one or more memories 110 or make the at least one or more key point applications 111 operate in the background mode.

In what follows, the at least one or more processors performing a method for providing the key point selection service by executing the commands of the key point application 111 will be described in a simplified way as the key point application 111 performing the method.

FIG. 2 is a flow diagram illustrating a method for selecting key points for real-time tracking in a mobile environment according to an embodiment of the present disclosure.

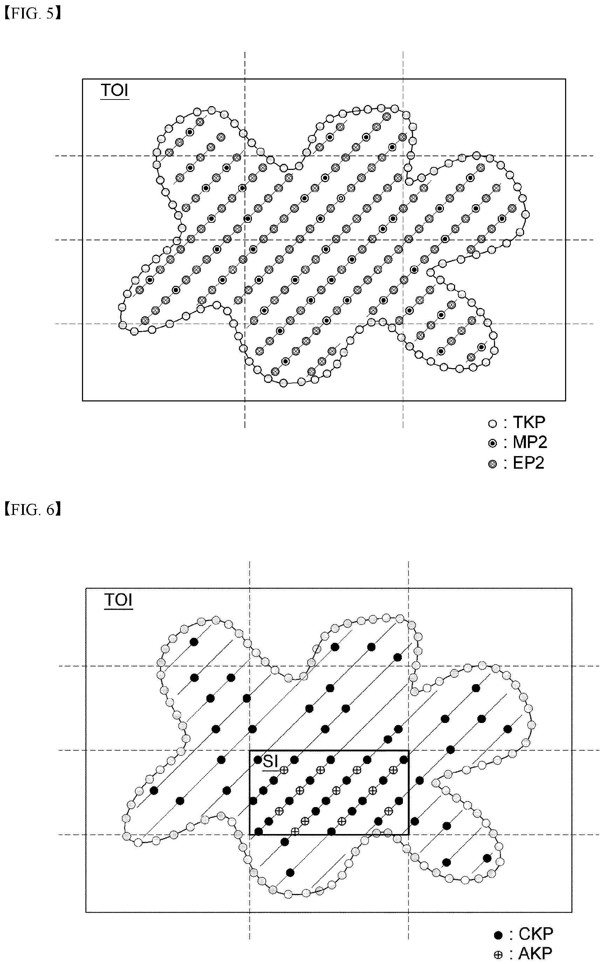

Referring to FIG. 5, a key point application 111 according to the embodiment executed by at least one or more processors of the computing device 100 or operating in the background mode may **obtain a target object image capturing the target object S101.**

Specifically, the key point application 111 according to the embodiment may obtain a target object image capturing the target object, which is an object in question for which to set key points.

At this time, the target object image may be an image capturing the target object from a predetermined viewpoint. However, preferably, it may be an image capturing the target object from the viewpoint of observing the front of the target object in the vertical direction.

Also, the key point application 111 according to the embodiment may **extract temporary key points within the obtained target object image S103**.

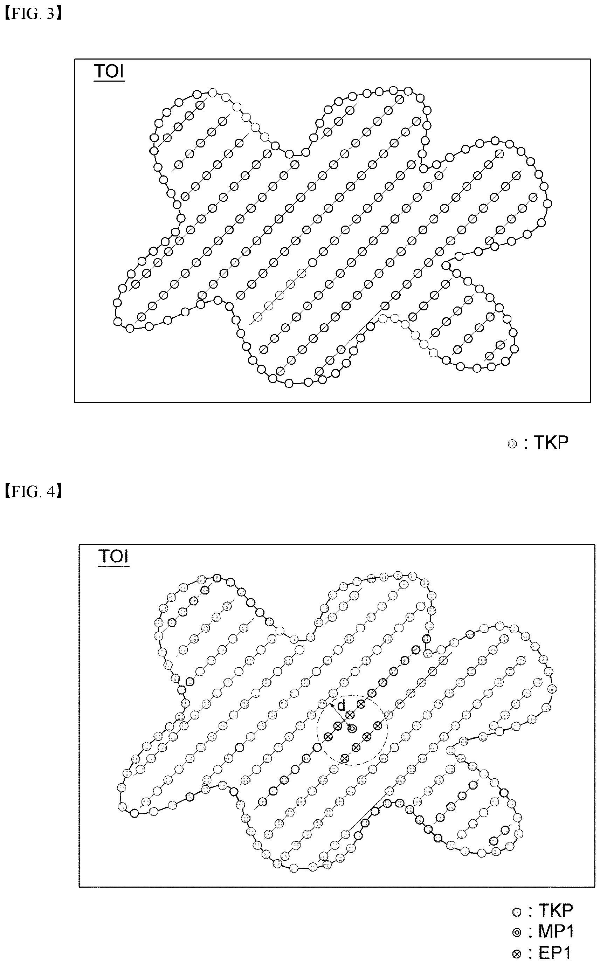

FIG. 3 illustrates a method for extracting temporary key points within a target object image according to an embodiment of the present disclosure.

Specifically, referring to FIG. 3, the key point application 111 according to the embodiment may extract a plurality of temporary key points (TKPs) in the target object image (TOI) in conjunction with a predetermined feature detector.

Here, the feature detector according to the embodiment may extract key points (e.g., edges and/or corners) of the target object as the temporary key points (TKPs).

At this time, the feature detector may calculate a feature score representing the detection relevance of each extracted temporary key point (TKP) for each temporary key point (TKP).

For example, the feature detector may be implemented based on algorithms such as FastFeatureDetector, MSER, SimpleBlobDetector, and/or GFTTDetector. However, the implementation above is only an example and is not limited to the specific algorithm.

In other words, the key point application 111 according to the embodiment may obtain a plurality of temporary key points (TKPs) in the target object image (TOI) and a feature score for each of the temporary key points (TKPs) in conjunction with the feature detector.

At this time, the key point application 111 according to the embodiment may extract at least one temporary key point (TKP) that satisfies a preset condition from the target object image (TOI).

The key point application 111 according to the embodiment may extract at least one temporary key point (TKP) that satisfies a predetermined feature score (e.g., greater than or equal to a predetermined value) and/or more temporary key points than a predetermined number from the target object image (TOI).

Also, the key point application 111 according to the embodiment may **determine confirmed key points according to the extracted temporary key points (TKPs) and a distribution criterion S105.**

Specifically, the key point application 111 according to the embodiment may determine the extracted temporary feature points (TKPs) as confirmed key points when the corresponding temporary key point (TKP) satisfies a predetermined distribution criterion.

Here, the **distribution criterion** according to the embodiment refers to the criterion for filtering the plurality of temporary key points (TKPs) so that at least one or more confirmed key points determined for a predetermined image (in the embodiment, the target object image (TOI)) are uniformly distributed within the corresponding image according to a predetermined spacing between the confirmed key points and/or a predetermined number of confirmed key points are uniformly distributed within the corresponding image.

More specifically, the key point application 111 according to the embodiment may 1) determine a predetermined number of temporary key points (TKPs) as the confirmed key points.

Specifically, the key point application 111 may arrange the plurality of temporary key points (TKPs) in order of feature score (i.e., descending order) for each of the plurality of temporary key points (TKPs).

Also, the key point application 111 may extract a predetermined number (N) of top N temporary key points (TKPs) from among the plurality of arranged temporary key points (TKPs).

Also, the key point application 111 may determine the extracted top N temporary key points (TKPs) as confirmed feature points.

In addition, the key point application 111 may perform filtering to remove the temporary key points left undetermined as the confirmed key points among the plurality of temporary feature points (TKPs).

FIG. 4 illustrates a method for filtering temporary key points based on a predetermined distance and determining confirmed key points according to an embodiment of the present disclosure.

Also, referring to FIG. 4, the key point application 111 according to the embodiment may 2) determine the confirmed key points by filtering temporary key points (TKPs) located within a predetermined mutual distance d.

Specifically, the key point application 111 may arrange the plurality of temporary key points (TKPs) in order of feature score (i.e., descending order) for each of the plurality of temporary feature points (TKPs).

Also, the key point application 111 may determine the temporary key point having the highest current feature score MP1 among the plurality of arranged key points (TKPs) as a first confirmed key point.

Also, the key point application 111 may detect a plurality of temporary key points (TKPs) located within a predetermined distance d from the determined first confirmed key point.

Also, the key point application 111 may filter the remaining temporary key points EP1 except for the first confirmed key point among the plurality of detected temporary key points (TKPs).

Also, the key point application 111 may determine the temporary key point having the highest current feature score among the filtered remaining temporary key points EP1 as a second confirmed key point.

Also, the key point application 111 may detect a plurality of temporary key points (TKPs) located within a predetermined distance d from the determined second confirmed key point.

Also, the key point application 111 may filter the remaining temporary key points EP1 except for the first and second confirmed key points among the plurality of detected temporary key points (TKPs).

Subsequently, the key point application 111 may determine the third to N-th confirmed key points by repeating the step of determining a confirmed key point based on the temporary key point having the highest current feature score MP1 and the step of filtering the remaining temporary key points.

FIG. 5 illustrates a method for filtering temporary key points (TKPs) based on predetermined image segmentation regions and determining confirmed key points according to an embodiment of the present disclosure.

Also, referring to FIG. 5, the key point application 111 according to the embodiment may 3) determine the confirmed key points by filtering temporary key points (TKPs) based on the predetermined maximum number of key points allowed for each image segmentation region.

Specifically, the key point application 111 may perform grid division on the target object image (TOI) to divide the target object image (TOI) into the predetermined image segmentation regions.

For example, the key point application 111 may perform grid division on the target object image (TOI) to divide the target object image (TOI) into `4 rows and 3 columns (4 by 3).'

At this time, the key point application 111 may preset the maximum number of key points allowed for each of the segmentation regions.

In other words, the key point application 111 may preset the maximum number of confirmed key points that may be included within each segmentation region of the target object image (TOI).

For example, the key point application 111 may preset the maximum number of key points for each of the first to twelfth segmentation regions within the target object image (TOI) to a predetermined number (e.g., 10000).

Also, the key point application 111 may filter the remaining temporary key points within each segmentation region when the number of at least one or more of the first to N-th confirmed key points included in each segmentation region reaches the predetermined maximum number of key points MN for the corresponding segmentation region.

Alternatively, the key point application 111 may arrange at least one or more temporary key points (TKPs) included in each segmentation region in order of feature score (i.e., descending order) of each of the corresponding temporary key points (TKPs).

Also, the key point application 111 may extract top MN temporary key points MP2 according to the predetermined maximum number MN of key points for each segmentation region among at least one or more temporary key points (TKPs) in each of the arranged segmentation regions.

Also, the key point application 111 may determine the extracted top MN temporary key points MP2 as confirmed key points and perform filtering to remove the remaining temporary key points EP2 left underdetermined as the confirmed key points.

As described above, the key point application 111 may improve the performance of various object detection and/or tracking services implemented using key points within the target object image (TOI) by filtering the plurality of temporary key points (TKPs) according to the distribution criterion so that at least one or more confirmed key points determined for the target object image (TOI) are uniformly distributed within the corresponding image.

Also, the key point application 111 according to the embodiment may **evaluate the determined confirmed key points and set additional key points S107.**

Specifically, the key point application 111 according to the embodiment may evaluate whether the number of at least one or more confirmed key points determined for each image segmentation region satisfies the maximum number of key points for the corresponding segmentation region.

For example, when the maximum number of first key points for the first segmentation region is '10000', and the number of first confirmed key points determined for the first segmentation region is '10000', the key point application 111 may evaluate that the first segmentation region satisfies the corresponding maximum number of key points.

On the other hand, when the maximum number of first key points for the first segmentation region is '10000', and the number of first confirmed key points determined for the first segmentation region is `9000', the key point application 111 according to the embodiment may evaluate that the first segmentation region does not satisfy the corresponding maximum number of key points.

Also, the key point application 111 according to the embodiment may terminate the step of determining confirmed key points S 105 if the number of confirmed key points for each of the plurality of segmentation regions reaches the maximum number of key points predetermined for the corresponding segmentation region.

FIG. 6 illustrates a method for setting additional key points according to an embodiment of the present disclosure.

Also, referring to FIG. 6, the key point application 111 according to the embodiment may set additional key points (AKPs) for the corresponding segmentation region according to the evaluation result.

Specifically, when it is determined that a predetermined segmentation region does not satisfy the maximum number of key points for the corresponding segmentation region (i.e., the number of at least one or more confirmed key points (CKPs) determined for the predetermined segmentation region is less than the maximum number of key points allowed for the corresponding segmentation region), the key point application 111 may set additional key points (AKPs) for the segmentation region for which the number of confirmed key points (CKPs) is less than the maximum number of key points (in what follows, unsatisfying segmentation region).

More specifically, the key point application 111 may re-perform the process of extracting temporary key points (TKPs) in the S103 step based on the image SI representing the unsatisfying segmentation region within the target object image (in what follows, an unsatisfying image segment).

Also, the key point application 111 may re-perform the process of determining confirmed key points (CKPs) in the S105 step based on a plurality of temporary key points (TKPs) (in what follows, second temporary key points) extracted by re-performing the process of extracting temporary key points (TKPs) on the unsatisfying image segment SI.

In other words, the key point application 111 may determine confirmed key points (CKPs) for the unsatisfying image segment (i.e., the unsatisfying segmentation region) according to the extracted second temporary key points (TKPs) and the distribution criterion.

Also, the key point application 111 may set the confirmed key points determined based on the second temporary key points (TKPs) (in what follows, second confirmed key points) as the additional key points (AKPs).

The key point application 111 may further include the set additional key points (AKPs) in the confirmed key points (CKPs) for the unsatisfying segmentation region.

Therefore, the key point application 111 may convert the unsatisfying segmentation region to a satisfying segmentation region that provides a predetermined maximum number of key points for the corresponding segmentation region.

Also, the key point application 111 may re-evaluate whether the number of confirmed key points (CKPs) including the additional key points (AKPs) satisfies the maximum number of key points for the corresponding segmentation region.

Also, if it is determined from the re-evaluation result that the corresponding segmentation region satisfies the maximum number of key points for the corresponding segmentation region, the key point application 111 may terminate the S107 step, namely, the process of evaluating the determined confirmed key points (CKPs) and setting additional key points (AKPs).

On the other hand, if it is determined from the re-evaluation result that the corresponding unsatisfying segmentation region still fails to satisfy the maximum number of key points for the corresponding segmentation result, the key point application 111 may utilize at least one or more temporary key points removed from filtering within the unsatisfying segmentation region (in what follows, removed key points) to satisfy the maximum number of key points.

Specifically, the key point application 111 may detect as many key points as needed to satisfy the maximum number of key points in order of feature score among the at least one or more removed key points.

Also, the key point application 111 may restore the at least one or more detected removed key points to the corresponding unsatisfying segmentation region.

In other words, if it is determined from the re-evaluation result that the corresponding unsatisfying segmentation region still fails to satisfy the maximum number of key points for the corresponding segmentation region, the key point application 111 may restore at least one or more removed key points having a high feature score among at least one or more removed key points removed within the unsatisfying segmentation region.

Also, the key point application 111 may further include the restored removed key points in the confirmed key points (CKPs) determined for the unsatisfying segmentation region as additional key points (AKPs).

Therefore, the key point application 111 may convert the unsatisfying segmentation region to a satisfying segmentation region that provides a predetermined maximum number of key points for the corresponding segmentation region.

As described above, the key point application 111 may distribute confirmed key points (CKPs) for a target object uniformly for each segmentation region within the target object image (TOI) and, at the same time, satisfy the number of required key points (in the embodiment, the predetermined maximum number of key points), thereby preventing the loss of significant key points during the process of distributing confirmed key points (CKPs) within the target object image (TOI) and providing more reliable confirmed key points (CKPs).

Meanwhile, when a predetermined segmentation region satisfies the maximum number of key points for the corresponding segmentation region (i.e., when the number of at least one or more confirmed key points (CKPs) determined for the predetermined segmentation region reaches the maximum number of key points of the corresponding segmentation region), the key point application 111 according to the embodiment may skip the process of setting additional key points (AKPs).

Also, the key point application 111 according to the embodiment may **determine final key points for the target object image (TOI) S109.**

In other words, the key point application 111 according to the embodiment may determine the confirmed key points (CKPs) obtained as described above for each segmentation region within the target object image (TOI) (in the embodiment, additional key points (AKPs) may be further included) as the final key points for the target object image (TOI).

Therefore, the key point application 111 may distribute the corresponding key points within the target object image (TOI) uniformly across the entire image region and thereby implement setting robust key points that prevent performance degradation of real-time detection and/or tracking of the corresponding target object even in the occurrence of scale change, viewpoint change, and/or various types of noise (e.g., image blurring due to motion at the time of photographing the target object, smear noise, and/or noise due to rolling shutter operation) for the corresponding target object.

In addition, the key point application 111 determines confirmed key points (CKPs) in the respective segmentation regions of the target object image (TOI) and thus enables parallel processing based on the confirmed key points (CKPs) in the respective segmentation regions when object detection and/or tracking process is performed using the determined confirmed key points (CKPs), thereby improving the data processing speed.

Also, the key point application 111 according to the embodiment may **perform an application service based on the determined final key points S111.**

Specifically, the key point application 111 according to the embodiment may perform various application services based on the determined final key points in conjunction with another key point application operating on the computing device 100 and/or an external key point application operating on an external computing device (e.g., another predetermined computing device 100 and/or a server).

At this time, another key point application and/or external key point application according to the embodiment may include an application operating in a mobile environment.

The key point application 111 according to the embodiment may store the target object tracking information including the determined final key points (e.g., the target object image, the final key points, a related process model, and/or information data) into a database.

At this time, as described above, the key point application 111 according to the embodiment may match the final key points for each of the plurality of segmentation regions to the corresponding segmentation region and store the matched final key points as the target object tracking information.

Also, the key point application 111 according to the embodiment may provide the target object tracking information to another key point application and/or an external key point application.

At this time, another key point application and/or external key point application receiving various data related to the final key points may perform a functional operation for providing various application services based on the received data, including an image-based object detection and/or tracking service, an augmented reality service, a self-driving service, a SLAM service, and/or a robot control service.

For example, to track the corresponding target object based on the provided target object tracking information, another key point application and/or the external key point application may divide a predetermined captured image into a plurality of segmentation regions according to the target object tracking information and perform image tracking by executing parallel processing based on the final key points set for each of the plurality of segmentation regions.

As described above, the key point application 111 may perform various application services based on the determined final key points in conjunction with another key point application and/or the external key point application.

In this way, even if the scale and/or viewpoint of the target object in the target object image (TOI) changes or various noises (e.g., blurring or light smearing) occur, the key point application 111 may provide robust key points that prevent degradation of detection and/or tracking performance for the object and may implement various application services as described above by using the provided robust key points, thereby realizing the application services (e.g., an object detection and/or tracking service, an augmented reality service, a self-driving service, a SLAM service, and/or a robot control service) based on more accurate and reliable data and improving the performance and quality of the services.

### - Another method for selecting key points for real-time tracking in a mobile environment

Meanwhile, in what follows, another method for selecting key points for real-time tracking in a mobile environment by a key point application 111 according to an embodiment of the present disclosure will be described with reference to appended drawings. At this time, descriptions overlapping those given above may be shortened or skipped.

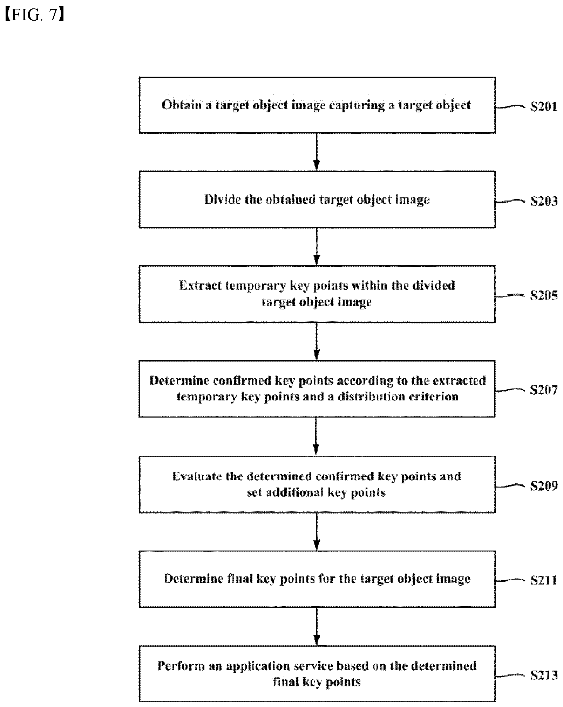

FIG. 7 is a flow diagram illustrating a method for selecting key points for real-time tracking in a mobile environment according to another embodiment of the present disclosure.

Referring to FIG. 7, the key point application 111 according to an embodiment of the present disclosure may **obtain a target object image (TOI) capturing a target object S201.**

In other words, the key point application 111 according to the embodiment may obtain a target object image (TOI) that captures a target object for which key points are to be set.

Also, the key point application 111 according to the embodiment may **divide the obtained target object image (TOI) S203.**

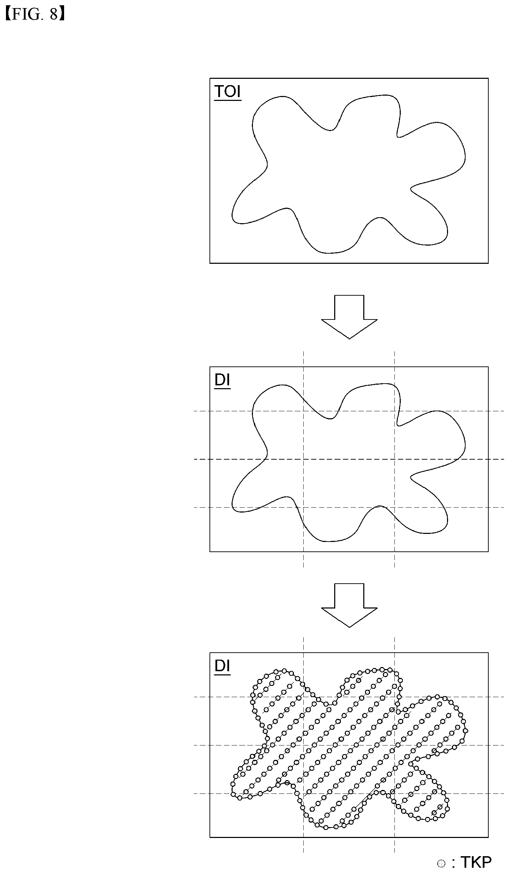

FIG. 8 illustrates a method for extracting temporary key points (TKPs) within a target object image (TOI) according to another embodiment of the present disclosure.

Specifically, referring to FIG. 8, the key point application 111 may perform predetermined grid division on the target object image (TOI) to divide the target object image (TOI) into predetermined image segmentation regions.

For example, the key point application 111 may perform predetermined grid division on the target object image (TOI) to divide the target object image (TOI) into `4 rows and 3 columns (4 by 3).'

Also, the key point application 111 according to the embodiment may **extract temporary key points (TKPs) within the divided target object image S205.**

Specifically, referring further to FIG. 8, the key point application 111 according to the embodiment may extract a plurality of temporary key points (TKPs) within the divided target object image (DI) (in what follows, a divided image) in conjunction with a predetermined feature detector.

Here, the feature detector according to the embodiment may extract feature points (e.g., edges and/or corners) of the target object as the temporary key points (TKPs).

At this time, the feature detector may calculate a feature score representing the detection relevance of each of the extracted temporary key points (TKPs) for each of the temporary key points (TKPs).

For example, the feature detector may be implemented based on algorithms such as FastFeatureDetector, MSER, SimpleBlobDetector, and/or GFTTDetector. However, the implementation above is only an example and is not limited to the specific algorithm.

In other words, the key point application 111 according to the embodiment may obtain a plurality of temporary key points (TKPs) in the divided image (DI) and a feature score for each of the temporary key points (TKPs) in conjunction with the feature detector.

At this time, the key point application 111 according to the embodiment may extract at least one temporary key point (TKP) satisfying a preset condition from each of the divided segmentation regions.

The key point application 111 according to the application may extract at least one temporary key point (TKP) that satisfies a predetermined feature score (e.g., greater than or equal to a predetermined value) and/or more temporary key points than a predetermined number from each of the divided segmentation regions.

Also, the key point application 111 according to the embodiment may **determine confirmed key points according to the extracted temporary key points (TKPs) and a distribution criterion S207.**

Specifically, the key point application 111 according to the embodiment may determine the extracted temporary feature points (TKPs) as confirmed key points when the corresponding temporary key point (TKP) satisfies a predetermined distribution criterion.

Here, the distribution criterion according to the embodiment refers to the criterion for filtering the plurality of temporary key points (TKPs) so that at least one or more confirmed key points determined for a predetermined image (in the embodiment, the divided image) are uniformly distributed within the corresponding image according to a predetermined spacing and/or a predetermined number.

More specifically, the key point application 111 according to the embodiment may 1) determine a predetermined number of temporary key points (TKPs) as the confirmed key points.

Specifically, the key point application 111 may arrange the plurality of temporary key points (TKPs) in order of feature score (i.e., descending order) for each of the plurality of temporary key points (TKPs) and extract a predetermined number (N) of top N temporary key points (TKPs) from among the plurality of arranged temporary key points (TKPs).

Also, the key point application 111 may determine the extracted top N temporary key points (TKPs) as confirmed feature points.

In addition, the key point application 111 may perform filtering to remove the temporary key points left undetermined as the confirmed key points among the plurality of temporary feature points (TKPs).

Also, referring further to FIG. 4, the key point application 111 according to the embodiment may 2) determine the confirmed key points by filtering temporary key points (TKPs) located within a predetermined mutual distance d.

Specifically, the key point application 111 may arrange the plurality of temporary key points (TKPs) in order of feature score (i.e., descending order) for each of the plurality of temporary feature points (TKPs).

Also, the key point application 111 may determine the temporary key point having the highest current feature score MP1 among the plurality of arranged key points (TKPs) as a first confirmed key point.

Also, the key point application 111 may detect a plurality of temporary key points (TKPs) located within a predetermined distance d from the determined first confirmed key point.

Also, the key point application 111 may filter the remaining temporary key points EP1 except for the first confirmed key point among the plurality of detected temporary key points (TKPs).

Also, the key point application 111 may determine the temporary key point having the highest current feature score among the filtered remaining temporary key points EP1 as a second confirmed key point.

Also, the key point application 111 may detect a plurality of temporary key points (TKPs) located within a predetermined distance d from the determined second confirmed key point.

Also, the key point application 111 may filter the remaining temporary key points EP1 except for the first and second confirmed key points among the plurality of detected temporary key points (TKPs).

Subsequently, the key point application 111 may determine the third to N-th confirmed key points by repeating the step of determining a confirmed key point based on the temporary key point having the highest current feature score MP1 and the step of filtering the remaining temporary key points.

Also, the key point application 111 may preset the maximum number of key points allowed for each of the segmentation regions within the divided image.

In other words, the key point application 111 may preset the maximum number of confirmed key points (CKPs) that may be included within each segmentation region of the target object image (TOI).

Also, the key point application 111 may filter the remaining temporary key points within each segmentation region when the number of at least one or more of the first to N-th confirmed key points included in each segmentation region of the divided image reaches the predetermined maximum number of key points MN for the corresponding segmentation region.

Alternatively, the key point application 111 may arrange at least one or more temporary key points (TKPs) included in each segmentation region of the divided image in order of feature score (i.e., descending order) of each of the corresponding temporary key points (TKPs).

Also, the key point application 111 may extract top MN temporary key points MP2 according to the predetermined maximum number MN of key points for each segmentation region among at least one or more temporary key points (TKPs) in each of the arranged segmentation regions.

Also, the key point application 111 may determine the extracted top MN temporary key points MP2 as confirmed key points and perform filtering to remove the remaining temporary key points EP2 left underdetermined as the confirmed key points.

As described above, the key point application 111 may improve the performance of various object detection and/or tracking services implemented using key points within the target object image (TOI) by filtering the plurality of temporary key points (TKPs) according to the distribution criterion so that at least one or more confirmed key points (CKPs) determined for the target object image (TOI) are uniformly distributed within the corresponding image.

Also, the key point application 111 according to the embodiment may **evaluate the determined confirmed key points (CKPs) and set additional key points (AKPs) S209.**

Specifically, the key point application 111 according to the embodiment may evaluate whether the number of at least one or more confirmed key points determined for each image segmentation region satisfies the maximum number of key points for the corresponding segmentation region.

Also, the key point application 111 according to the embodiment may terminate the step of determining confirmed key points S207 if the number of confirmed key points for each of the plurality of segmentation regions reaches the maximum number of key points predetermined for the corresponding segmentation region.

Also, referring further to FIG. 6, the key point application 111 according to the embodiment may set additional key points (AKPs) for the corresponding segmentation region according to the evaluation result.

Specifically, when it is determined that a predetermined segmentation region does not satisfy the maximum number of key points for the corresponding segmentation region (i.e., the number of at least one or more confirmed key points (CKPs) determined for the predetermined segmentation region is less than the maximum number of key points allowed for the corresponding segmentation region), the key point application 111 may set additional key points (AKPs) for the segmentation region (unsatisfying segmentation region) for which the number of confirmed key points (CKPs) is less than the maximum number of key points.

More specifically, the key point application 111 may re-perform the process of extracting temporary key points (TKPs) in the S205 step based on the image representing the unsatisfying segmentation region (the unsatisfying image segment SI) within the target object image.

Also, the key point application 111 may re-perform the process of determining confirmed key points (CKPs) in the S207 step based on a plurality of temporary key points (TKPs) (in what follows, second temporary key points) extracted by re-performing the process of extracting temporary key points (TKPs) on the unsatisfying image segment SI.

In other words, the key point application 111 may determine confirmed key points (CKPs) for the unsatisfying image segment SI (i.e., the unsatisfying segmentation region) according to the extracted second temporary key points (TKPs) and the distribution criterion.

Also, the key point application 111 may set the confirmed key points determined based on the second temporary key points (TKPs) (in what follows, second confirmed key points) as the additional key points (AKPs).

The key point application 111 may further include the set additional key points (AKPs) in the confirmed key points (CKPs) for the unsatisfying segmentation region.

Therefore, the key point application 111 may convert the unsatisfying segmentation region to a satisfying segmentation region that provides a predetermined maximum number of key points for the corresponding segmentation region.

Also, the key point application 111 may re-evaluate whether the number of confirmed key points (CKPs) including the additional key points (AKPs) satisfies the maximum number of key points for the corresponding segmentation region.

Also, if it is determined from the re-evaluation result that the corresponding segmentation region satisfies the maximum number of key points for the corresponding segmentation region, the key point application 111 may skip the process of setting additional key points (AKPs).

On the other hand, if it is determined from the re-evaluation result that the corresponding unsatisfying segmentation region still fails to satisfy the maximum number of key points for the corresponding segmentation result, the key point application 111 may utilize at least one or more temporary key points removed from filtering within the unsatisfying segmentation region (in what follows, removed key points) to satisfy the maximum number of key points.

Specifically, the key point application 111 may detect as many key points as needed to satisfy the maximum number of key points in order of feature score among the at least one or more removed key points.

Also, the key point application 111 may restore the at least one or more detected removed key points to the corresponding unsatisfying segmentation region.

In other words, if it is determined from the re-evaluation result that the corresponding unsatisfying segmentation region still fails to satisfy the maximum number of key points for the corresponding segmentation region, the key point application 111 may restore at least one or more removed key points having a high feature score among at least one or more removed key points removed within the unsatisfying segmentation region.

Also, the key point application 111 may further include the restored removed key points in the confirmed key points (CKPs) determined for the unsatisfying segmentation region as additional key points (AKPs).

Therefore, the key point application 111 may convert the unsatisfying segmentation region to a satisfying segmentation region that provides a predetermined maximum number of key points for the corresponding segmentation region.

Meanwhile, when a predetermined segmentation region satisfies the maximum number of key points for the corresponding segmentation region (i.e., when the number of at least one or more confirmed key points (CKPs) determined for the predetermined segmentation region reaches the maximum number of key points of the corresponding segmentation region), the key point application 111 according to the embodiment may terminate the S209 step, namely, the process of evaluating determined confirmed key points (CKPs) and setting additional key points (AKPs).

Also, the key point application 111 according to the embodiment may **determine final key points for the target object image (TOI) S211.**

In other words, the key point application 111 according to the embodiment may determine the confirmed key points (CKPs) obtained as described above for each segmentation region within the target object image (TOI) (in the embodiment, additional key points (AKPs) may be further included) as the final key points for the target object image (TOI).

Also, the key point application 111 according to the embodiment may **perform an application service based on the determined final key points S213.**

Specifically, the key point application 111 according to the embodiment may perform various application services (e.g., an object detection and/or tracking service, an augmented reality service, a self-driving service, a SLAM service, and/or a robot control service) based on the determined final key points in conjunction with another key point application operating on the computing device 100 and/or an external key point application operating on an external computing device (e.g., another predetermined computing device 100 and/or a server).

The key point application 111 according to the embodiment may store the target object tracking information including the determined final key points (e.g., the target object image, the final key points, a related process model, and/or information data) into a database.

At this time, as described above, the key point application 111 according to the embodiment may match the final key points for each of the plurality of segmentation regions to the corresponding segmentation region and store the matched final key points as the target object tracking information.

Also, the key point application 111 according to the embodiment may provide the target object tracking information to another key point application and/or an external key point application.

At this time, another key point application and/or external key point application receiving various data related to the final key points may perform a functional operation for providing various application services based on the received data, including an image-based object detection and/or tracking service, an augmented reality service, a self-driving service, a SLAM service, and/or a robot control service.

For example, to track the corresponding target object based on the provided target object tracking information, another key point application and/or the external key point application may divide a predetermined captured image into a plurality of segmentation regions according to the target object tracking information and perform image tracking by executing parallel processing based on the final key points set for each of the plurality of segmentation regions.

As described above, the key point application 111 may perform various application services based on the determined final key points in conjunction with another key point application and/or the external key point application.

As described above, a method for selecting key points for real-time tracking in a mobile environment according to an embodiment of the present disclosure extracts key points of a target object in an image so that the extracted key points are uniformly distributed within the image, thereby providing robust key points preventing the performance of detecting and/or tracking the object from being degraded regardless of the scale change and/or viewpoint change for the target object within the image or occurrence of various types of noise (e.g., blurring or light smearing).

Also, a method for selecting key points for real-time tracking in a mobile environment according to an embodiment of the present disclosure enables the implementation of various application services based on the robust key points (e.g., an object detection and/or tracking service, an augmented reality service, a self-driving service, a SLAM service, and/or a robot control service), thereby realizing various application services using more accurate and reliable key point data and, at the same time, improving the performance and quality of the services.

Also, a method for selecting key points for real-time tracking in a mobile environment according to an embodiment of the present disclosure divides an image into predetermined regions, provides key points of the target object in the respective segmentation regions, and thus enables parallel processing based on the key points in the respective segmentation regions when object detection and/or tracking process is performed using the provided key points, thereby improving the data processing speed.

Meanwhile, the embodiments of the present disclosure described above may be implemented in the form of program commands which may be executed through various constituting elements of a computing device and recorded in a computer-readable recording medium. The computer-readable recording medium may include program commands, data files, and data structures separately or in combination thereof. The program commands recorded in the medium may be those designed and configured specifically for the present disclosure or may be those commonly available for those skilled in the field of computer software. Examples of a computer-readable recoding medium may include magnetic media such as hard-disks, floppy disks, and magnetic tapes; optical media such as CD-ROMs and DVDs; and hardware devices specially designed to store and execute program commands such as ROM, RAM, and flash memory. Examples of program commands include not only machine codes such as those generated by a compiler but also high-level language codes which may be executed by a computer through an interpreter and the like. The hardware device may be configured to be operated by one or more software modules to perform the operations of the present disclosure, and vice versa.

Specific implementation of the present disclosure are embodiments, which does not limit the technical scope of the present disclosure in any way. For the clarity of the specification, descriptions of conventional electronic structures, control systems, software, and other functional aspects of the systems may be omitted. Also, connection of lines between constituting elements shown in the figure or connecting members illustrate functional connections and/or physical or circuit connections, which may be replaceable in an actual device or represented by additional, various functional, physical, or circuit connection. Also, unless explicitly stated otherwise, "essential" or "important" elements may not necessarily refer to constituting elements needed for application of the present disclosure.

Also, although detailed descriptions of the present disclosure have been given with reference to preferred embodiments of the present disclosure, it should be understood by those skilled in the corresponding technical field or by those having common knowledge in the corresponding technical field that the present disclosure may be modified and changed in various ways without departing from the technical principles and scope specified in the appended claims. Therefore, the technical scope of the present disclosure is not limited to the specifications provided in the detailed descriptions of this document but has to be defined by the appended claims.

## Claims

1. A method of selecting key points for real-time tracking in a mobile environment through a key point application executed by at least one processor of a terminal, the method comprising:
obtaining a target object image capturing a target object;
extracting a plurality of temporary key points from the obtained target object image;
determining confirmed key points by filtering the plurality of extracted temporary key points according to a predetermined distribution criterion;
setting the confirmed key points as final key points for the target object image;
storing target object tracking information including the final key points set for the target object image; and
providing the target object tracking information to an application executing a predetermined function through the target object tracking in a mobile environment.

2. The method of claim 1, wherein the determining confirmed key points by filtering the plurality of extracted temporary key points according to a predetermined distribution criterion comprising:
filtering temporary key points according to a first distribution criterion due to spacings between key points within the target object image and
filtering temporary key points according to a second distribution criterion which specifies the maximum number of confirmed key points.

3. The method of claim 1 or claim 2, wherein the filtering temporary key points according to a first distribution criterion due to spacings between key points within the target object image comprising:
determining a temporary key point having the highest current feature score among the plurality of temporary key points as a first confirmed key point and
filtering temporary key points located within a predetermined distance from the determined first confirmed key point.

4. The method of claims 1 to 3, wherein the filtering temporary key points according to a first distribution criterion due to spacings between key points within the target object image comprising:
determining a temporary key point having the highest current feature score among the plurality of filtered temporary key points as a second confirmed key point,
filtering temporary key points located within a predetermined distance from the second confirmed key point, and
determining third to N-th confirmed key points by repeating the determining and filtering confirmed key points.

5. The method of claims 1to 4, wherein the filtering temporary key points according to a second distribution criterion which specifies the maximum number of confirmed key points comprising:
determining a plurality of segmentation regions by dividing the target object image into a plurality of regions and
filtering the rest of temporary key points within a first segmentation region if the number of confirmed key points included in the first segmentation region among the first to N-th confirmed key points reaches the maximum number of the confirmed key points.

6. The method of claims 1 to 5, wherein the determining confirmed key points by filtering the plurality of extracted temporary key points according to a predetermined distribution criterion comprising:
terminating the determining the confirmed key points if the number of determined confirmed key points in each of the plurality of segmentation regions reaches the maximum number of the confirmed key points.

7. The method of claims 1 to 5, wherein the determining confirmed key points by filtering the plurality of extracted temporary key points according to a predetermined distribution criterion comprising:
detecting, among the plurality of segmentation regions, a second segmentation region in which the number of determined confirmed key points is less than the maximum number of the confirmed key points, and all of the extracted temporary key points have been filtered;
re-extracting a plurality of temporary key points from the partial-image representing the detected second segmentation region; and
determining additional key points by filtering the plurality of re-extracted temporary key points according to the predetermined distribution criterion.

8. The method of claims 1 to 7, wherein the setting the confirmed key points as final key points for the target object image comprising:
setting final key points for the target object image by including the determined additional key points.

9. The method of claims 1 to 6, wherein the storing target object tracking information including the final key points set for the target object image comprising:
storing final key points classified for each of the plurality of segmentation regions as the target object tracking information by matching the final key points to each of the segmentation regions.

10. The method of claims 1 to 9, wherein the providing the target object tracking information to an application executing a predetermined function through the target object tracking in a mobile environment comprising:
classifying an image captured when the application in the mobile environment is tracking the target object into a plurality of segmentation regions, and
providing the target object tracking information for image tracking through final key points set by parallel operation for each of the plurality of segmentation regions.

11. A method of selecting key points for real-time tracking in a mobile environment through a key point application executed by at least one processor of a terminal, the method comprising:
obtaining a target object image capturing a target object;
dividing the obtained target object image into predetermined regions;
extracting a plurality of temporary key points for the target object within the divided target object image;
determining confirmed key points for each of the segmentation regions by filtering the plurality of extracted temporary key points according to a predetermined distribution criterion;
setting the confirmed key points as final key points for the target object image;
storing target object tracking information including the final key points set for the target object image; and
providing the target object tracking information to an application executing a predetermined function through the target object tracking in a mobile environment.
